# EUROPEAN PATENT SPECIFICATION

(11) **EP 1 396 779 B1**
(45) Date of publication and mention of the grant of the patent: **11.03.2009**
(21) Application number: 03291991.2
(22) Date of filing: 08.08.2003
(51) Int. Cl.: G06F 1/00

(54) **System and method to facilitate separate cardholder and system access to resources controlled by a smart card**
System und Methode für separaten Kartenhalter- und Systemzugriff auf Ressourcen bei Kontrolle durch eine Smart Card
Système et méthode facilitant l'accès séparé vers porte-carte et système accédant aux ressources controlées par une carte à puce

(30) Priority: 15.08.2002 US 218665
(43) Date of publication of application: 10.03.2004
(73) Proprietor: ACTIVCARD IRELAND LIMITED, Dublin 2 (IE)
(72) Inventor: Fedronic, Dominique Louis Joseph, Belmont CA 94002 (US); Le Saint, Eric F., Los Altos, CA 94024 (US)
(74) Representative: Colas, Jean-Pierre

(56) References cited:
- WO-A-01/27723
- US-A1- 2002 038 426

## Description

### Field of Invention

The present invention relates to a data processing system and method for accessing a security token using a second identifier assigned to a biometric authentication system.

### Background of Invention

Biometric data is increasingly being used for authentication and other purposes. When combined with the features available in smart cards, a reasonably robust authentication system results which simplifies access to a wide variety of computer-based services. For example, a typical user has a number of usernames and passwords that have to memorized in order to gain access to each specific service. By storing the usernames and passwords in a smart card, the cardholder only needs to remember a personal identification number or PIN. By adding biometrics to the authentication process, the PIN entry procedure is replaced with a biometric scan that retrieves and enters the PIN directly into the smart card. There are two solutions in the current art that supports PIN retrieval and the current generation of ISO-7616-4 compliant smart cards as follows.

The first solution involves storing a PIN locally on a client and using a current biometric sample to retrieve and send the user's PIN to the smart card. The biometric sample is compared locally with an established biometric template associated with the cardholder. This solution is the least secure since both the user's biometric template and PIN temporarily resides on the local client. An example of this solution is disclosed in US Patent 6,011,858 to Stock, et al.

The second solution involves storing the cardholder's PIN in a database on a server, which is retrievable by matching the cardholder's biometric sample to a previously enrolled biometric template of the cardholder. The retrieved PIN is then sent to the smart card, which allows access to the cards' internal resources. This solution is more secure than the local client solution but is still dependent on the cardholder's PIN. If a cardholder were to change his or her PIN, the server-based solution would no longer allow the use of biometrics to gain access to the smart card.

At a minimum, the cardholder would need to reenroll his or her PIN in order to recover biometric access. This adds to the system administration burden and causes delays and inconvenience to the cardholder. Lastly, it is also possible that a cardholder could repudiate transactions by claiming that his or her smart card were compromised by persons having access to the PIN at the server end. The latter situation is mitigated considerably by enciphering the stored PIN, however, the argument is still valid since most PINs are usually 4 digits (32 bits) in length as a compromise between security and the ability of the cardholder to memorize the PIN.

Thus it would be highly desirable to have a biometric authentication system, which incorporates the robust features inherent in the server-based solution described above but operates independently of the cardholder's PIN.

International Patent Application published under number WO 01/27723 discloses a system for controlling access to resources controlled by a smart card comprising :
- a client TC operatively equipped with said smart card SC and a biometric scanning device BR for input of biometric data associated with a cardholder,
- a server (TC also) including biometric data processing means, a biometric database and at least one record in said biometric database retrievable using a biometric result of said biometric data processing.

Said smart card SC includes authentication means for at least preventing unauthenticated access to said resources by authenticating said cardholder, and a memory having operatively stored therein a user's personal identification number associated with said cardholder and a token secret associated with the server TC.

### Summary of Invention

In accordance with the invention there is provided a system as defined in claim 1.

In accordance with the invention there is also provided a method as defined in claim 15.

This invention provides a mechanism, which allows a user's personal identification number (PIN) associated with a smart card to operate independently from a biometric authentication system. This improvement reduces the administrative burden of having to keep a user's PIN synchronized with the PIN used to access the user's smart card following successful biometric authentication. A smart card as used herein refers to a microprocessor-based memory card.

Two embodiments of the invention are disclosed. The first embodiment retrieves a server key from a database associated with a biometric authentication server. A comparison is performed following processing of a user's biometric data, which is compared to a database of biometric templates. A successful match retrieves the server key associated with the user's smart card. The server key may be a distinct symmetric key, a master key that is diversified to obtain a symmetric server key or a public key counterpart to a card private key.

Once the server key is available a challenge/response protocol is initiated which authenticates the server to the smart card. Access to card resources is permitted following successful authentication. It should be noted that biometric authentications are generally used to authenticate cardholders to their smart cards as an alternative to remembering personal identification numbers (PINs). Additional authentications are typically performed between the smart card and the server, which utilize more robust cryptographic methods.

In the second embodiment of the invention, a system PIN preferably having bit strength of at least 64 bits (8 digits) is stored in both the smart card and in the biometric database. As before, the cardholders' biometric data is compared against a database of biometric templates. A match retrieves the record containing the server PIN and is sent to the smart card for comparison with the stored version of the system PIN. If a match is found, access is allowed to the card's internal resources.

Additional security enhancements include the use of secure messaging protocols between the smart card and the server and cryptographically protecting data stored in the biometric database.

### Brief Description of Drawings

FIG. 1 - is a generalized block diagram illustrating the invention.
FIG. 2 - is a detailed block diagram illustrating the input of biometric data and processing by a server based biometric processor.
FIG. 3 - is a detailed block diagram illustrating the input of the processed result into a biometric database and records match against a preexisting biometric template.
FIG. 4A - is a detailed block diagram illustrating one embodiment of the invention where a challenge/response protocol is used to authenticate the cardholder to the smart card.
FIG. 4B - is a detailed block diagram illustrating a second embodiment of the invention where a third PIN is used to authenticate the cardholder to the smart card
FIG. 5 - is a flowchart illustrating the steps involved in implementing the invention.
FIG. 5A - is a flowchart illustrating the authentication steps in the first embodiment of the invention.
FIG. 5B - is a flowchart illustrating the authentication steps in the second embodiment of the invention.

### Detailed Description of Preferred Embodiment

This invention provides a mechanism, which allows a user's personal identification number (PIN) to operate independently from a biometric authentication system. This improvement reduces the administrative burden of having to keep a user's PIN synchronized with the PIN used to access the user's smart card following successful biometric authentication.

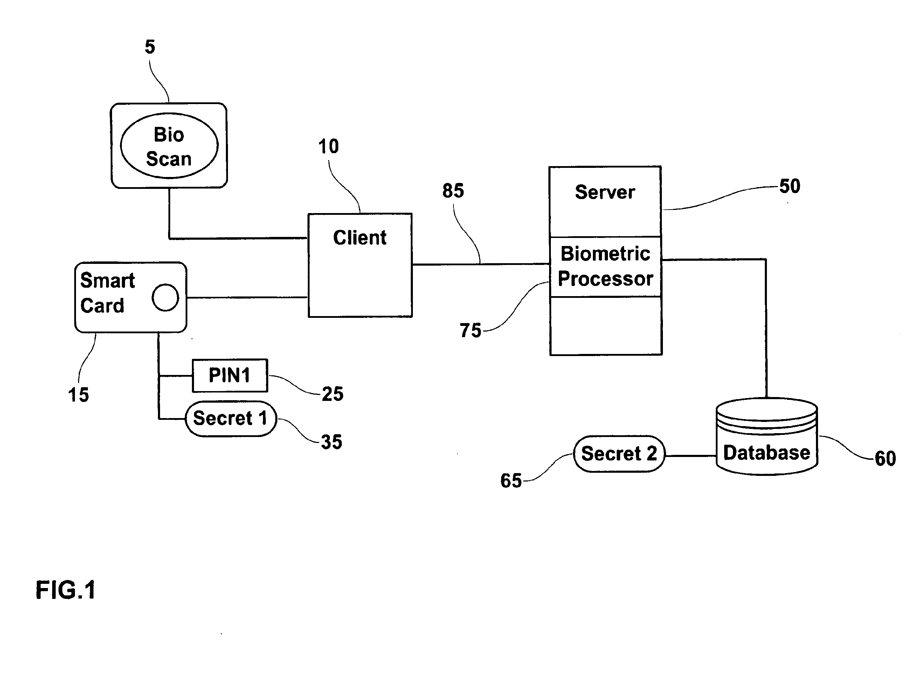

Referring to FIG. 1, a generalized system block diagram is depicted. In the basic common embodiment of the invention, a client 10 is locally and operatively connected to a biometric scanning device 5 and a user's smart card 15. The client is in processing communications 85 with a server 50.

The biometric scanning device 5 may include a fingerprint scanner, a retinal scanner, an iris scanner, a hand geometry scanner, a face recognition scanner, hand writing scanner or a voice pattern scanner. The biometric scanner 5 is used to obtain a biometric sample from a cardholder and transfer the biometric data to the client 10.

The smart card 15 includes standard libraries and cryptographic extensions that facilitate both publicly available symmetric and asymmetric cryptographic functions including the ability to perform challenge response authentications. The smart card has been personalized with a user's PIN (PIN1) 25 and includes a secret (Secret 1) 35 which allows access to card resources without requiring the user's PIN (PIN1) 25.

The card secret (Secret 1) 35 in the preferred embodiment of the invention is a symmetric key that is used to authenticate the server to the smart card. A symmetric key is preferred to minimize use of scarce memory storage and limited processing power available in the smart card. An asymmetric private key will provide equivalent functionality and is envisioned by the inventor as well. In a second embodiment of the invention, the card secret (Secret 1) is a second PIN, which is compared with a third PIN sent from the server. The choice of secret (PIN or cryptographic key) is dependent on the type of smart cards being deployed.

Open platform smart cards allow access to protected resources using a PIN, customized cryptographic protocols or both. Closed platform cards generally require a PIN to access protected resources. However, multiple PINS can be defined having equivalent card privileges and thus may be used with this invention as well.

The server 50 includes a biometric processor 75. The biometric processor provides greater biometric conditioning to improve recognition and false error discrimination. The results of the biometric processing are used to query a database 60 containing biometric template records.

The biometric template records are relationally associated with specific server secrets necessary to authenticate a user to his or her smart card. In the instant case, the server secret (Secret 2) 65 will be used to authenticate the user to his or her smart card. For purposes of example, it should be assumed that the user has already enrolled their particular biometric data and stored in a biometric template record of the biometric database.

In the preferred embodiment of the invention, the communications between the client and the server 85 is performed using a secure messaging protocol such as TCP/IP implementing transport layer security (TLS) including secure socket layer (SSL) encryption, IPSEC, etc.

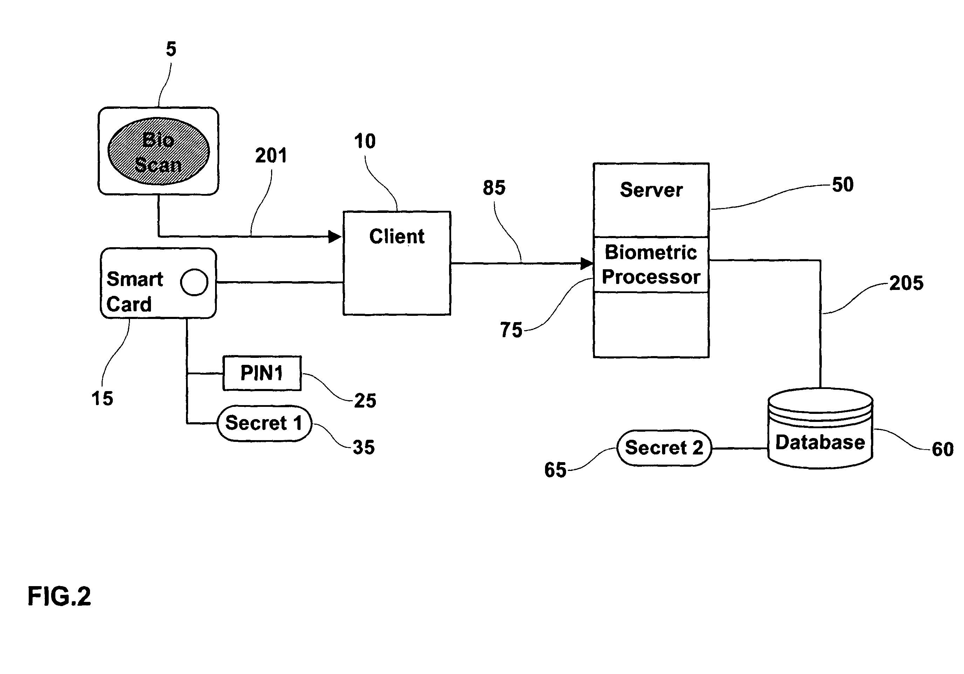

In FIG. 2, a cardholder has entered his or her biometric data into the biometric scanner 5. The biometric data is transferred 201 to the client and communicated 85 to the server 50. The biometric data is processed using the biometric processor 75 and the resulting biometric data used to query 205 the database 60 against existing biometric templates.

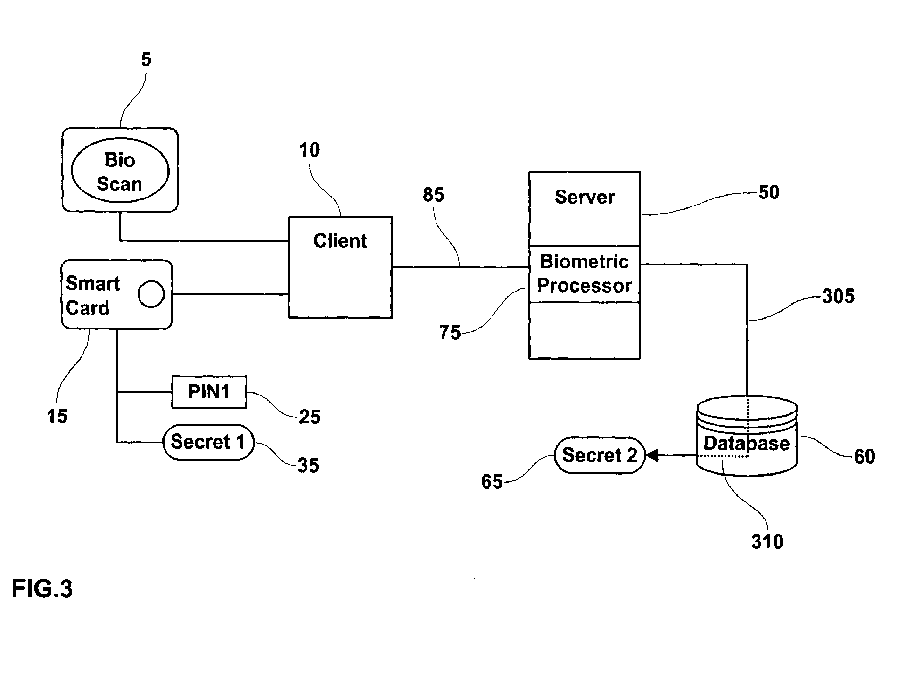

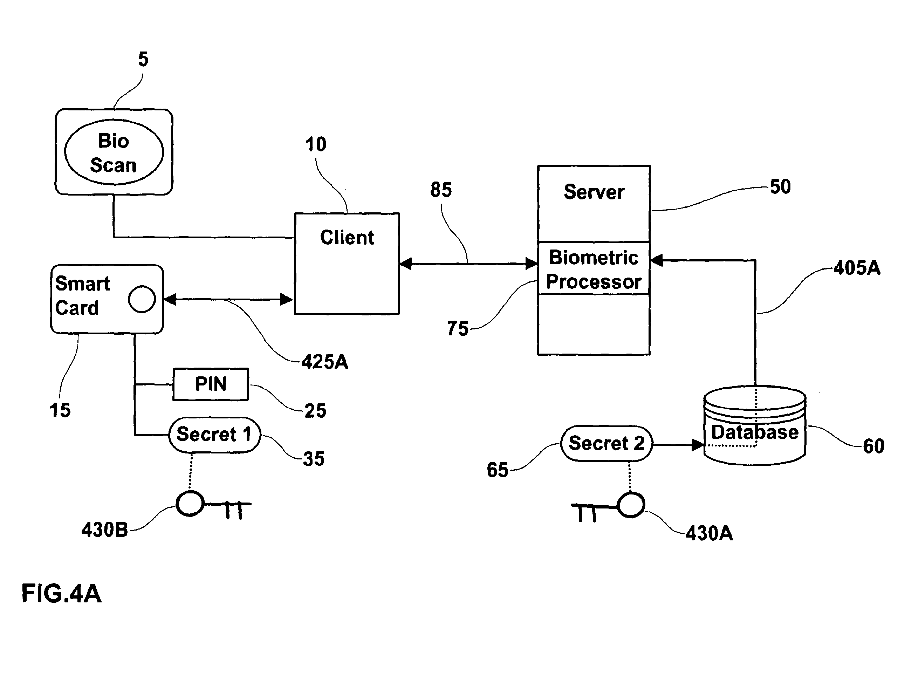

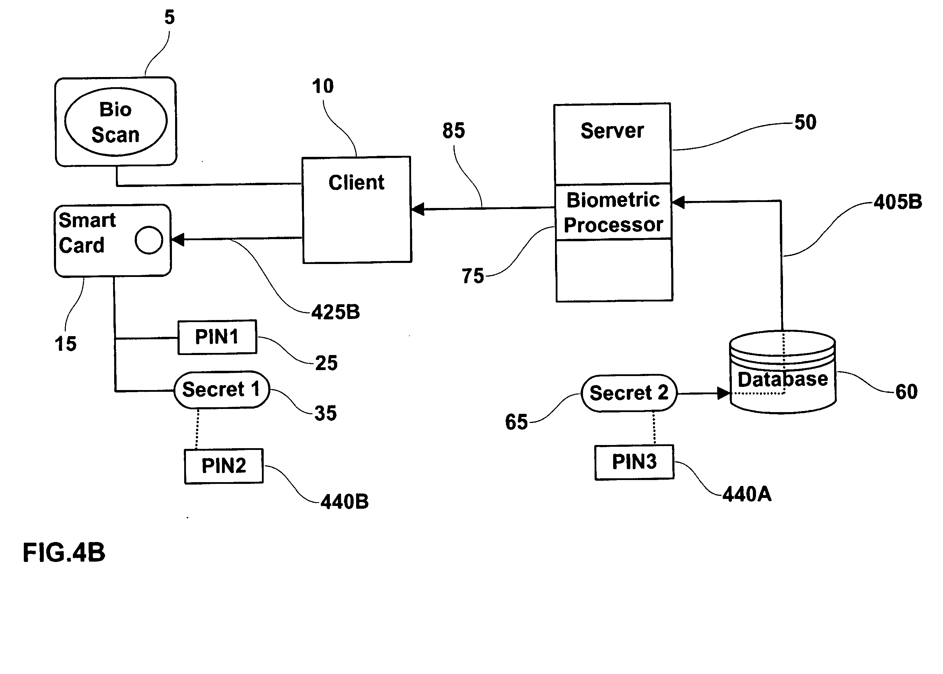

In FIG. 3, the database matches 310 a biometric template with the biometric data. The recording containing the biometric template is retrieved from the database and the secret contained therein used to authenticate the user to the smart card as described in FIG.4A and 4B.

In FIG. 4A, the server secret (Secret 2) 65 includes a symmetric cryptographic key 430A. The cryptographic key 430A may be a distinct card key or a master key, which is diversified to obtain the card key 430B based on a unique identifier supplied by the smart card during the authentication process.

The cryptographic key 430A is transferred 405A to the server where a challenge\response authentication protocol 425A is performed, which implicitly authenticates the user to the smart card. In another embodiment of the invention, the server cryptographic key 430A is the public key counterpart to the card private key 430B. An equivalent of the challenge\response protocol is employed using the asymmetric keys.

Referring to FIG. 4B, the second embodiment of the invention is shown where the server secret (Secret 2) 65 includes a server PIN (PIN3) 440A which is equal to a card PIN (PIN2) 440B but unrelated to the user PIN (PIN1) 25. In this embodiment of the invention, the server PIN (PIN3) 440A is transferred 405B from the database record and is sent 425B to the smart card 15 where it is compared with the card PIN (PIN2) 440B. A match implicitly authenticates the user to the smart card 15.

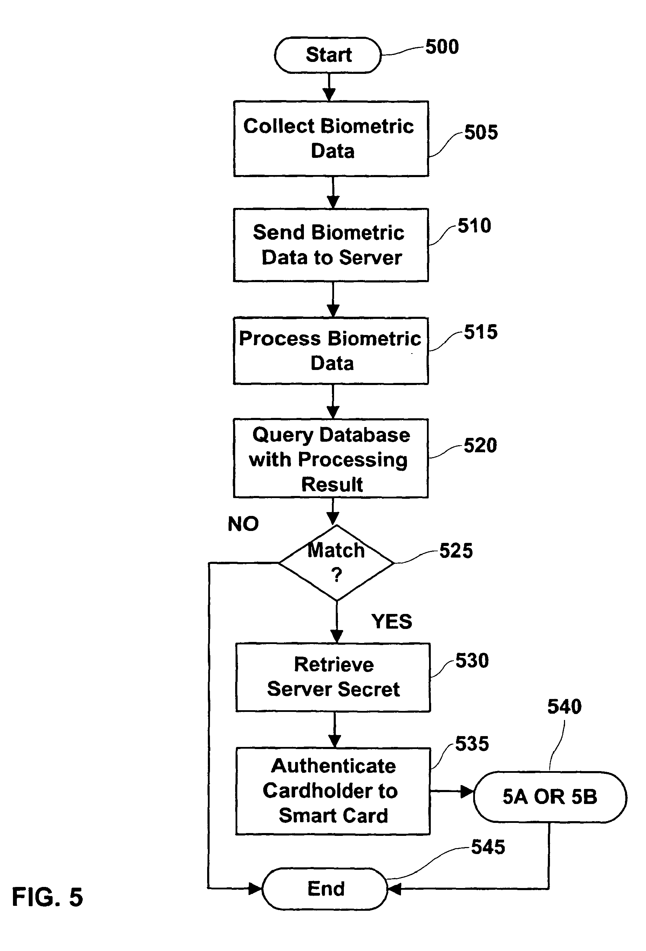

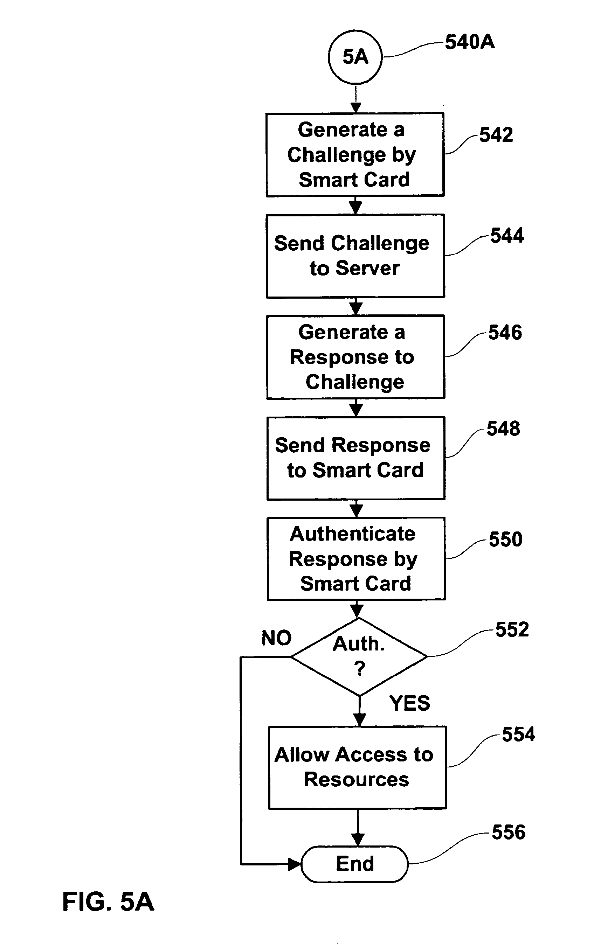

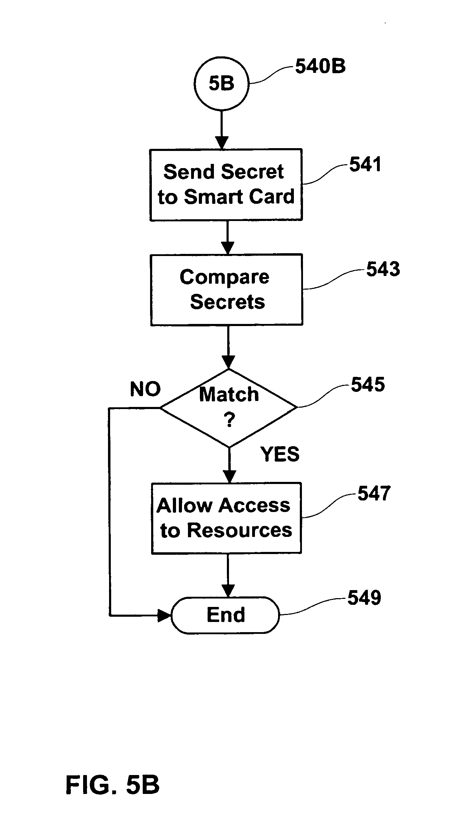

In FIG. 5, a flowchart is presented which provides the steps involved in implementing the invention. The process is initiated 500 by collecting a biometric sample from a cardholder 505. The biometric sample is sent to a server for processing 510. A biometric engine processes the biometric sample 515 and the result is used to query a database 520 of enrolled biometric templates. If no match is found 525 the authentication process ends 545 and the cardholder must either retry entering his or her biometric sample or notify a system administrator of the failed authentication.

If a biometric template record matches 525 that of the cardholder, a server secret is retrieved which is used to authenticate the cardholder to the smart card 535. The authentication process employed is dependent on the type of smart card 540. The more robust method is shown in FIG. 5A. This method may be implemented in open platform smart cards.

The authentication process continues 540A with a challenge being generated by the smart card 542. The challenge is typically a random number encrypted with a card key previously installed inside the smart card. The challenge is sent to the server 544. Depending on the counterpart server key, the challenge may include a unique identifier that is used to diversify a master key to generate an operable server key. A response is generated by decrypting the challenge using the server key 546, which is subsequently returned to the smart card 548.

The smart card authenticates the response by comparing the initial random number to the response 550. If no match is found 552 the authentication session ends 556. If successful 552, the cardholder is authenticated to the smart card and allowed to access the card resources 554 until his or her session ends 556.

In a second embodiment of the invention shown in FIG. 5B, the authentication process continues 540B by sending the retrieved secret to the smart card 541. In this embodiment of the invention, the retrieved secret is a system PIN established independently of the cardholder PIN. The smart card compares the received system PIN with the previously installed system PIN 543. If no match is found 545, the authentication session ends 549. If a match is found 545, the cardholder is authenticated to the smart card and allowed to access the card resources 547 until his or her session ends 549.

The foregoing described embodiments of the invention are provided as illustrations and descriptions. They are not intended to limit the invention to precise form described. In particular, it is contemplated that functional implementation of the invention described herein may be implemented equivalently in hardware, software, firmware, and/or other available functional components or building blocks. Other variations and embodiments are possible in light of above teachings, and it is not intended that this Detailed Description limit the scope of invention, but rather by the Claims following herein.

## Claims

1. A system to facilitate access to resources controlled by a smart card (15) comprising:
- a client (10) operatively equipped with said smart card (15) and a biometric scanning device (5) for input of biometric data associated with said cardholder,
- a server (50) including
- biometric data processing means for processing said biometric data and producing a biometric result,
- a biometric data base (60) containing biometric templates;
- means for comparing said biometric result with one of said biometric templates associated with said cardholder, and
- a record containing a server secret associated with said smart card (15),
- said smart card (15) including authentication means for
- authenticating said server using said server secret, and
- providing access to said resources of said smart card in response to said authentication,
**characterized in that:**
- said server comprises means for retrieving said server secret associated with said smart card (15) in said record in response to a match between said biometric result and said one biometric template,
- said smart card memory stores:
- a user's personal identification number (25) associated with said cardholder, and
- a token secret (35) associated with said server (50), said token secret being different and independent from said user's personal identification number (25),
- said smart card authenticating means are responsive to:
- said personal identification number to authenticate said cardholder on the basis of said personal identification number (25), and
- said server secret (65), independently of said personal identification number, to authenticate said server(50) on the basis of said server secret (35) and said token secret (65) following a match between said biometric result and said one biometric template.

2. The system according to claim 1, wherein said server (50) includes a biometric database (60) which includes said at least one record.

3. The system according to claim 1 or 2, wherein said token secret (35) includes a first cryptographic key (430B).

4. The system according to claim 3, wherein said authentication means includes a cryptographic algorithm compatible with said first cryptographic key (430B).

5. The system according to claim 4, wherein said server secret (65) includes a second cryptographic key (430A) compatible with said first cryptographic key (430B).

6. The system according to claim 4, wherein said authentication means includes means for performing challenge\response authentications.

7. The system according to any claim 1 to 6, wherein said authentication means includes a comparator.

8. The system according to claim 7, wherein said token secret (35) includes a first identifier (440B).

9. The system according to claim 8, wherein said server secret (65) includes a second identifier (440A).

10. The system according to claim 9, wherein said comparator compares said first identifier (440B) and said second identifier (440A) and allows access to said resources if an exact match is found.

11. The system according to any claim 1 to 10, wherein said biometric data includes at least a fingerprint, a handwriting scan, a retinal scan, an iris scan, a hand geometry scan, a face recognition scan or a voice pattern scan.

12. The system according to any claim 1 to 11, wherein said resources include means for authenticating said smart card (15) to said server (50).

13. The system according to any claim 1 to 12, wherein said client (10) and said server (50) are in processing communications using a secure messaging protocol.

14. The system according to any claim 1 to 13, wherein said client (10) and said smart card (15) are in processing communications using a secure messaging protocol.

15. The system according to any claim 1 to 14, wherein said at least one record is cryptographically protected.

16. A method to facilitate access to resources controlled by a smart card (15) comprising:
A) allowing a cardholder associated with said smart card to gain access to said resources by means of a personal identification number (PIN) associated with said cardholder,
B) allowing a server (50) to separately gain access to said resources, said server access comprising the following steps:
a. collecting (505) biometric data from a cardholder associated with said smart card (15) using a biometric scanning device (5),
b. sending (510) said biometric data to a server (50) for processing,
c. generating (515) a biometric result from said processing, c1. querying with said biometric result a biometric database (60) against existing biometric templates,
d. retrieving (530) in a record a server secret (65), associated with one of said templates if said biometric result matches said one biometric template, said server secret (65) being different from said personal identification number (PIN),
e. authenticating (535) said server (50) to said smart card (15) using said server secret (65) and a token secret (35) of said smart cared, and
f. allowing (554,547) said access to said resources upon successfulness of said authentication.

17. The method according to claim 16, wherein said step of authenticating (535) said cardholder to said smart card (15) includes:
a. generating (542) a challenge by said smart card (15),
b. sending (544) said challenge to said server (50),
c. generating (546) a response to said challenge using said server secret (65),
d. sending (548) said response to said smart card (15), e authenticating (550) said response by said smart card (15).

18. The method according to claim 16 or 17, wherein said server secret (65) is a cryptographic key compatible with an existing cryptographic key and algorithm operatively installed in said smart card (15).

19. The method according to claim 16, wherein said step of authenticating (535) said cardholder to said smart card (15) includes:
a. sending (541) said server secret (65) to said smart card (15),
b comparing (543) said server secret (65) to said token secret (35) in said smart card (15),
c. authenticating said server secret (65) by said smart card (15).

20. The method according to claim 16 or 19, wherein said server secret (65) is a Personal Identification Number unknown to said cardholder.

21. The method according to any claim 16 to 20, wherein said biometric data includes a fingerprint, a retinal scan, an iris scan, a hand geometry scan, a face recognition scan, or a voice pattern scan.

## Patentansprüche

1. System zum Vereinfachen des Zugriffs auf Ressourcen unter Kontrolle durch eine Smartcard (15), mit:
- einem Client (10), der operativ mit einer Smartcard (15) und einer biometrischen Abtastvorrichtung (5) zum Eingeben von dem Karteninhaber zugeordneten biometrischen Daten versehen ist,
- einem Server (50) mit
- einer Biometriedatenverarbeitungseinrichtung zum Verarbeiten der biometrischen Daten und zum Erzeugen eines biometrischen Ergebnisses,
- einer Biometriedatenbasis (60), die biometrische Vorlagen enthält,
- einer Einrichtung zum Vergleichen des biometrischen Ergebnisses mit einer der biometrischen Vorlagen, welche dem Karteninhaber zugeordnet sind, und
- einer Aufzeichnung, die einen geheimen Serverschlüssel enthält, welcher der Smartcard (15) zugeordnet ist,
- wobei die Smartcard (15) eine Authentifizierungseinrichtung aufweist, um
- den Server unter Verwendung des geheimen Serverschlüssels zu authentifizieren, und
- Zugriff auf die Ressourcen der Smartcard in Reaktion auf die Authentifizierung zu gewähren,
**dadurch gekennzeichnet, dass:**
- der Server eine Einrichtung aufweist, um in Reaktion auf eine Übereinstimmung zwischen dem biometrischen Ergebnis und der einen biometrischen Vorlage den der Smartcard (15) zugeordneten geheimen Serverschlüssels in der Aufzeichnung aufzufinden,
- der Smartcard-Speicher speichert:
- eine dem Karteninhaber zugeordnete persönliche Identifizierungsnummer (25) des Benutzers, und
- einen dem Server (50) zugeordneten geheimen Tokenschlüssel (35), wobei der geheime Tokenschlüssel von der persönlichen Identifizierungsnummer (25) des Benutzers verschieden und unabhängig ist,
- die Authentifizierungseinrichtung der Smartcard auf folgendes reagiert:
- die persönliche Identifizierungsnummer, um den Karteninhaber auf der Basis der persönlichen Identifizierungsnummer (25) zu authentifizieren, und
- den geheimen Serverschlüssel (65), unabhängig von der persönlichen Identifizierungsnummer, um den Server (50) auf der Basis des geheimen Serverschlüssels (35) und des geheimen Tokenschlüssels (65) auf eine Übereinstimmung zwischen dem biometrischen Ergebnis und der biometrischen Vorlage zu authentisieren.

2. System nach Anspruch 1, bei dem der Server (50) eine biometrische Datenbank (60) aufweist, welche zumindest eine Aufzeichnung enthält.

3. System nach Anspruch 1 oder 2, bei dem der geheime Tokenschlüssel (35) einen ersten kryptographischen Schlüssel (430B) enthält.

4. System nach Anspruch 3, bei dem die Authentisierungseinrichtung einen kryptographischen Algorithmus enthält, der mit dem ersten kryptographischen Schlüssel (430B) kompatibel ist.

5. System nach Anspruch 4, bei dem der geheime Serverschlüssel (65) einen zweiten kryptographischen Schlüssel (430A) enthält, der mit dem ersten kryptographischen Schlüssel (430B) kompatibel ist.

6. System nach Anspruch 4, bei dem die Authentifizierungseinrichtung eine Einrichtung zum Durchführen von Challenge-Response-Authentifizierungen.

7. System nach einem der Ansprüche 1 bis 6, bei dem die Authentifizierungseinrichtung einen Komparator aufweist.

8. System nach Anspruch 7, bei dem der geheime Tokenschlüssel (35) einen ersten Identifikator (440B) aufweist.

9. System nach Anspruch 8, bei dem der geheime Serverschlüssel (65) einen zweiten Identifikator (440A) aufweist.

10. System nach Anspruch 9, bei dem der Komparator den ersten Identifikator (440B) und den zweiten Identifikator (440A) vergleicht und einen Zugriff erlaubt, wenn eine exakte Übereinstimmung festgestellt wird.

11. System nach einem der Ansprüche 1 bis 10, bei dem die biometrischen Daten mindestens einen Fingerabdruck, eine Handschriftabtastung, eine Retinaabtastung, eine Irisabtastung, eine Handgeometrieabtastung, eine Gesichtserkennungsabtastung oder eine Stimmmusterabtastung umfassen.

12. System nach einem der Ansprüche 1 bis 11, bei dem die Ressourcen eine Einrichtung zum Authentifizieren der Smartcard (15) gegenüber dem Server (50) umfassen.

13. System nach einem der Ansprüche 1 bis 12, bei dem der Klient (10) und der Server (50) unter Verwendung eines gesicherten Nachrichtenprotokolls in Verarbeitungsverbindung stehen.

14. System nach einem der Ansprüche 1 bis 13, bei dem der Klient (10) und die Smartcard (15) unter Verwendung eines gesicherten Nachrichtenprotokolls in Verarbeitungsverbindung stehen.

15. System nach einem der Ansprüche 1 bis 14, bei dem die zumindest eine Aufzeichnung kryptographisch geschützt ist.

16. Verfahren zur Vereinfachung des Zugriffs auf Ressourcen unter Kontrolle durch eine Smartcard (15), mit:
A) Ermöglichen des Zugriffs durch einen der Smartcard zugeordneten Karteninhaber auf die Ressourcen mittels einer auf dem Karteninhaber zugeordneten persönlichen Identifizierungsnummer (PIN);
B) Ermöglichen des separaten Zugriffs durch einen Server (50) auf die Ressourcen, wobei der Serverzugriff die folgenden Schritte umfasst:
a. Sammeln (505) biometrischer Daten eines der Smartcard (15) zugeordneten Karteninhabers unter Verwendung einer biometrischen Abtastvorrichtung (5),
b. Senden (510) der biometrischen Daten an einen Server (50) zur Verarbeitung,
c. Erzeugen (515) eines biometrischen Ergebnisses aus der Verarbeitung,
c1. Abfragen einer Biometriedatenbank (60) nach existierenden biometrischen Vorlagen mittels des biometrischen Ergebnisses,
d. Auffinden (530) eines einer der Vorlagen zugeordneten geheimen Serverschlüssels (63) in einer Aufzeichnung, wenn das biometrische Ergebnis der genannten biometrischen Vorlage entspricht, wobei der geheime Serverschlüssel (65) von der persönlichen Identifizierungsnummer (PIN) verschieden ist,
e. Authentifizieren (535) des Servers (50) gegenüber der Smartcard (15) unter Verwendung des geheimen Serverschlüssels (65) und eines geheimen Tokenschlüssels (35) der Smartcard, und
f. Zulassen (554, 547) des Zugriffs auf die Ressourcen bei Erfolg der Authentifizierung.

17. Verfahren nach Anspruch 16, bei dem der Schritt des Authentifizierens (535) des Karteninhabers gegenüber der Smartcard (15) umfasst:
a. Erzeugen (542) einer Challenge durch die Smartcard 15),
b. Senden (544) der Challenge an den Server (50),
c. Erzeugen (546) einer Response auf die Challenge unter Verwendung des geheimen Serverschlüssels (65),
d. Authentifizieren (550) der Response durch die Smartcard (15).

18. Verfahren nach Anspruch 16 oder 17, bei dem der geheime Serverschlüssel (65) ein kryptographischer Schlüssel ist, der mit einem existierenden kryptographischen Schlüssel und Algorithmus, die in der Smartcard (15) operativ installiert sind, kompatibel ist.

19. Verfahren nach Anspruch 16, bei dem der Schritt des Authentifizierens (535) des Karteninhabers gegenüber der Smartcard (15) umfasst:
a. Senden (541) des geheimen Serverschlüssels (65) an die Smartcard (15),
b. Vergleichen (543) des geheimen Serverschlüssels (65) mit dem geheimen Tokenschlüssel (35) in der Smartcard (15),
c. Authentifizieren des geheimen Serverschlüssels (65) durch die Smartcard (15).

20. Verfahren nach Anspruch 16 oder 19, bei dem der geheime Serverschlüssel (65) eine dem Karteninhaber nicht bekannte persönliche Identifizierungsnummer (PIN) ist.

21. Verfahren nach einem der Ansprüche 16 bis 20, bei dem die biometrischen Daten einen Fingerabdruck, eine Retinaabtastung, eine Irisabtastung, eine Handgeometrieabtastung, eine Gesichtserkennungsabtastung oder eine Stimmmusterabtastung umfassen.

## Revendications

1. Système pour faciliter l'accès à des ressources contrôlées par une carte à puce (15) comprenant :
- un client (10) équipé opérationnellement de ladite carte à puce (15) et d'un dispositif de balayage biométrique (5) pour rentrée de données biométriques associées audit titulaire de carte,
- un serveur (50) incluant
- des moyens de traitement de données biométriques pour traiter lesdites données biométriques et produire un résultat biométrique,
- une base de données biométriques (60) contenant des modèles biométriques ;
- des moyens pour comparer ledit résultat biométrique avec un desdits modèles biométriques associés audit titulaire de carte, et
- un enregistrement contenant un secret de serveur associé à ladite carte à puce (15),
- ladite carte à puce (15) incluant des moyens d'authentification pour
- authentifier ledit serveur en utilisant ledit secret de serveur, et
- fournir l'accès auxdites ressources de ladite carte à puce en réponse à ladite authentification,
**caractérisé en ce que :**
- ledit serveur comprend des moyens pour récupérer ledit secret de serveur associé à ladite carte à puce (15) dans ledit enregistrement en réponse à une concordance entre ledit résultat biométrique et ledit un modèle biométrique,
- la mémoire de ladite carte à puce stocke :
- un numéro d'identification personnel (25) d'utilisateur associé audit titulaire de carte, et
- un secret de jeton (35) associé audit serveur (50), ledit secret de jeton étant différent et indépendant dudit numéro d'identification personnel (25) d'utilisateur,
- lesdits moyens d'authentification de carte à puce sont sensibles :
- audit numéro d'identification personnel pour authentifier ledit titulaire de carte sur la base dudit numéro d'identification personnel (25), et
- audit secret de serveur (65), indépendamment dudit numéro d'identification personnel, pour authentifier ledit serveur (50) sur la base dudit secret de serveur (35) et dudit secret de jeton (65) suite à une concordance entre ledit résultat biométrique et ledit un modèle biométrique.

2. Système selon la revendication 1, dans lequel ledit serveur (50) inclut une base de données biométriques (60) qui inclut ledit au moins un enregistrement.

3. Système selon la revendication 1 ou 2, dans lequel ledit secret de jeton (35) inclut une première clé cryptographique (430B).

4. Système selon la revendication 3, dans lequel lesdits moyens d'authentification incluent un algorithme cryptographique compatible avec ladite première clé cryptographique (430B).

5. Système selon la revendication 4, dans lequel ledit secret de serveur (65) inclut une seconde clé cryptographique (430A) compatible avec ladite première clé cryptographique (430B).

6. Système selon la revendication 4, dans lequel lesdits moyens d'authentification incluent des moyens pour effectuer des authentifications défi/réponse.

7. Système selon l'une quelconque des revendications 1 à 6, dans lequel lesdits moyens d'authentification incluent un comparateur.

8. Système selon la revendication 7, dans lequel ledit secret de jeton (35) inclut un premier identificateur (440B).

9. Système selon la revendication 8, dans lequel ledit secret de serveur (65) inclut un second identificateur (440A).

10. Système selon la revendication 9, dans lequel ledit comparateur compare ledit premier identificateur (440B) et ledit second identificateur (440A) et autorise l'accès auxdites ressources si une concordance exacte est trouvée.

11. Système selon l'une quelconque des revendications 1 à 10, dans lequel lesdites données biométriques incluent au moins une empreinte digitale, un scan d'écriture manuscrite, un scan rétinien, un scan de l'iris, un scan de la géométrie de la main, un scan de reconnaissance faciale ou un scan de modèle vocal.

12. Système selon l'une quelconque des revendications 1 à 11, dans lequel lesdites ressources incluent des moyens pour authentifier ladite carte à puce (15) audit serveur (50).

13. Système selon l'une quelconque des revendications 1 à 12, dans lequel ledit client (10) et ledit serveur (50) sont en traitement de communications en utilisant un protocole de messagerie sécurisé.

14. Système selon l'une quelconque des revendications 1 à 13, dans lequel ledit client (10) et ladite carte à puce (15) sont en traitement de communications en utilisant un protocole de messagerie sécurisé.

15. Système selon l'une quelconque des revendications 1 à 14, dans lequel ledit au moins un enregistrement est protégé cryptographiquement.

16. Procédé pour faciliter l'accès à des ressources contrôlées par une carte à puce (15) comprenant :
A) l'autorisation dun titulaire de carte associé à ladite carte à puce à avoir accès auxdites ressources au moyen d'un numéro d'identification personnel (PIN) associé audit titulaire de carte,
B) l'autorisation d'un serveur (50) à avoir accès séparément auxdites ressources, ledit accès du serveur comprenant les étapes suivantes :
a. collecter (505) des données biométriques en provenance d'un titulaire de carte associé à ladite carte à puce (15) en utilisant un dispositif de balayage biométrique (5),
b. envoyer (510) lesdites données biométriques à un serveur (50) pour le traitement,
c. générer (515) un résultat biométrique à partir dudit traitement,
c1. interroger avec ledit résultat biométrique une base de données biométrique (60) par rapport à des modèles biométriques existants,
d. récupérer (530) dans un enregistrement un secret de serveur (65), associé à un desdits modèles si ledit résultat biométrique concorde avec ledit un modèle biométrique, ledit secret de serveur (65) étant différent dudit numéro d'identification personnel (PIN),
e. authentifier (535) ledit serveur (50) à ladite carte à puce (15) en utilisant ledit secret de serveur (65) et un secret de jeton (35) de ladite carte à puce, et
f. autoriser (554, 547) ledit accès auxdites ressources lors de la réussite de ladite authentification.

17. Procédé selon la revendication 16, dans lequel ladite étape d'authentification (535) dudit titulaire de carte à ladite carte à puce (15) inclut :
a. la génération (542) dun défi par ladite carte à puce (15),
b. renvoi (544) dudit défi audit serveur (50),
c. la génération (546) d'une réponse audit défi en utilisant ledit secret de serveur (65),
d. renvoi (548) de ladite réponse à ladite carte à puce (15),
e. l'authentification (550) de ladite réponse par ladite carte à puce (15).

18. Procédé selon la revendication 16 ou 17, dans lequel ledit secret de serveur (65) est une clé cryptographique compatible avec une clé cryptographique existante et un algorithme installés opérationnellement dans ladite carte à puce (15).

19. Procédé selon la revendication 16, dans lequel ladite étape d'authentification (535) dudit titulaire de carte à ladite carte à puce (15) inclut :
a. l'envoi (541) dudit secret de serveur (65) à ladite carte à puce (15),
b. la comparaison (543) dudit secret de serveur (65) audit secret de jeton (35) dans ladite carte à puce (15),
c. l'authentification dudit secret de serveur (65) par ladite carte à puce (15).

20. Procédé selon la revendication 16 ou 19, dans lequel ledit secret de serveur (65) est un numéro d'identification personnel inconnu dudit titulaire de carte.

21. Procédé selon l'une quelconque des revendications 16 à 20, dans lequel lesdites données biométriques incluent une empreinte digitale, un scan rétinien, un scan de l'iris, un scan de la géométrie de la main, un scan de reconnaissance faciale, ou un scan de modèle vocal.
